# EUROPÄISCHE PATENTSCHRIFT

(11) **EP 3 556 592 B1**
(45) Veröffentlichungstag und Bekanntmachung des Hinweises auf die Patenterteilung: **08.04.2020**
(21) Anmeldenummer: 19166781.5
(22) Anmeldetag: 02.04.2019
(51) Int. Cl.: B60K 6/387, B60K 6/48, B60W 10/06, B60W 10/08, B60W 20/40, B60W 20/16, B60W 10/113

(54) **VERFAHREN ZUR RÜCKGEWINNUNG VON ENERGIE DES VERBRENNUNGSMOTORS SOWIE STEUERGERÄT ZUR DURCHFÜHRUNG DES VERFAHRENS**
METHOD OF RECOVERING ENERGY FROM A COMBUSTION ENGINE AND CONTROL DEVICE FOR CARRYING OUT THE METHOD
PROCÉDÉ DE RÉCUPÉRATION D'ÉNERGIE DU MOTEUR À COMBUSTION INTERNE AINSI QU'APPAREIL DE COMMANDE PERMETTANT LA MISE EN OEUVRE DUDIT PROCÉDÉ

(30) Priorität: 20.04.2018 DE 102018206115
(43) Veröffentlichungstag der Anmeldung: 23.10.2019
(73) Patentinhaber: Magna PT B.V. & Co. KG, 74199 Untergruppenbach (DE)
(72) Erfinder: PROST, Jacques, 74074 Heilbronn (DE); ZHANG, Qingzhu, 52068 Aachen (DE)
(74) Vertreter: Rausch, Gabriele

(56) Entgegenhaltungen:
- EP-A1- 1 714 817
- DE-A1-102010 022 749
- US-A1- 2016 375 892

## Beschreibung

Die Erfindung betrifft Verfahren zur Rückgewinnung von Energie eines Verbrennungsmotors sowie Steuergerät zur Durchführung des Verfahrens.

### Stand der Technik

Die auf dem Gebiet der Kraftfahrzeugtechnik besteht seit einigen Jahren ein Trend hin zu Hybridfahrzeugen, bei denen die Antriebsleistung mittels eines Verbrennungsmotor (VM)s und mittels einer elektrischen Maschine bereitgestellt werden kann. Hierbei wird generell unterschieden zwischen sogenannten milden Hybrid Anwendungen, bei denen die elektrische Maschine lediglich kurzzeitig als alleinige Antriebsquelle verwendbar ist bzw. überwiegend als Boost-Antrieb eingesetzt wird. In sogenannten Range-Extender- Antriebssträngen dient eine elektrische Maschine hingegen als Hauptantriebsmotor und der Verbrennungsmotor wird zum Laden einer Batterie mitgeführt. Hinsichtlich des Layouts von solchen Antriebssträngen besteht die Möglichkeit den Verbrennungsmotor die elektrische Antriebsmaschine in Leistungsflussrichtung vor einer Kupplungsanordnung anzuordnen. Dieses Layout ist konstruktiv vergleichsweise einfach realisierbar, hat jedoch funktionelle Einschränkungen. In derartigen Hybrid Antriebsträngen wird als Getriebeanordnung häufig eine Planetengetriebe-Anordnung gegebenenfalls in Verbindung mit einem stufenlosen Getriebe verwendet. Besonders vorteilhaft ist jedoch die Integration eines Doppelkupplungsgetriebes in einem Hybrid-Antriebstrang, insbesondere dann, wenn die elektrische Maschine mit dem Eingang eines Teilgetriebes verbunden ist.

Aus der DE 10 2010 044 618 A1 ist ein Doppelkupplungsgetriebe mit nasser Doppelkupplung, elektromechanischer Betätigung des Schaltsystems und einer elektrohydraulischen Aktuatorik für die Doppelkupplung bekannt.
Mit der elektrischen Aktuatorik ist das Doppelkupplungsgetriebe in der Lage, bei abgetrenntem Verbrennungsmotor (VM) automatisch zu kuppeln und zu schalten. Es ist somit vorbereitet für ein Start/Stopp-System und eine erweiterte Segelfunktion, bei der das Fahrzeug bei abgekoppeltem Verbrennungsmotor frei rollt. Die elektrische Aktuatorik ermöglicht darüber hinaus die einfache Hybridisierung des Getriebes, durch eine zusätzliche E-Maschine.

Durch die Verschärfung der Abgasvorschriften für Verbrennungsfahrzeuge ist es sinnvoll, jede auch kleinere Einsparungen an fossilen Brennstoffen und somit an Abgasen umzusetzen.
Die unterschiedlichen Hybrid-Antriebstränge bieten die Möglichkeit, Energie, die das Fahrzeug ein Betrieb enthält, auf die unterschiedlichste Art und Weise zurück zu gewinnen. Als einfachstes Beispiel ist dabei die Rückgewinnung von Energie aus den Bremsvorgängen des Fahrzeugs bekannt, die mit einem Wirkungsgrad über 80% Energie in den Antriebsprozess rückführt.

Allerdings gibt es im Fahrzeug noch weitere Bereiche, die bezüglich einer Energierückgewinnung betrachtet werden können.
Auch ein Verbrennungsmotor, der nach dem Abschalten der Zündung ausläuft oder auch nur von seiner Arbeitsdrehzahl in die Leerlaufdrehzahl absinkt, enthält Rotationsenergie, die bisher ohne Nutzung als Schleppverlust lediglich in Wärme umgewandelt wird.

Aus der US 2016 0375 892 A1 ist ein Verfahren bekannt, die in einem Verbrennungsmotor enthaltene Energie zurückzugewinnen. In einer Antriebsanordnung mit einem Verbrennungsmotor sowie einer elektrischen Maschine und einem Startergenerator wird die elektrische Energie des Verbrennungsmotors im Startergenerator zurückgewonnen.

Es ist Aufgabe der Erfindung, ein Verfahren zur Rückgewinnung von Energie aus einem Verbrennungsmotor vorzustellen.

### Beschreibung der Erfindung

Die Aufgabe wird gelöst mit einem Verfahren von Rückgewinnen von kinetischer Energie eines Verbrennungsmotors durch Reduktion der Drehzahl des Verbrennungsmotors während einer vorgegebenen Zeit in einem Fahrzeug und Umwandlung der kinetischen Energie der Rotation des Verbrennungsmotors oder einer Antriebseinheit in elektrische Energie durch mindestens eine elektrische Maschine.

Durch die Rückgewinnung der Energie des Verbrennungsmotors kann der Energieverbrauch des Gesamtfahrzeuges reduziert werden. Die Energie, die ansonsten durch Schleppverluste verschwindet, wird sinnvoll verwendet, Die noch in der Rotation des Verbrennungsmotors gespeicherte Energie wird entweder direkt am Verbrennungsmotor oder an einer Antriebseinheit, einer sich drehenden Welle abgegriffen.

Es ist dabei eine Alternative, dass der Verbrennungsmotor abgeschaltet wird und zumindest ein Teil der kinetischen Energie des auslaufenden Verbrennungsmotors rückgewonnen wird.

Die andere Alternative besteht darin, dass der Verbrennungsmotor abgekoppelt wird und zumindest ein Teil der kinetischen Energie des auslaufenden Abtriebs rückgewonnen wird.

In der erfindungsgemäßen Ausführungsform wird das Verfahren in einem Doppelkupplungsgetriebe umgesetzt, wobei die elektrische Maschine, die zur Rückgewinnung der Energie eingesetzt wird, in einem Doppelkupplungsgetriebe mit einem ersten und zweiten Teilgetriebe an einem Teilgetriebe ankoppelbar ist.

Dabei wird vorteilhafterweise die Energie so zurückgewonnen, dass die Energie des auslaufenden Verbrennungsmotors mittels einer ersten Kupplung und Stellen eines Drehmoments im ersten Teilgetriebe und einer Reduktion des Drehmoments der elektrischen Maschinen erfolgt. Hier wird also die elektrische Maschine nicht als Generator betrieben, sondern die Energie wird zur Reduktion der elektrischen Energieversorgungsseite der elektrischen Maschine verwendet.

Es kann aber auch sein, dass die elektrische Maschine als Generator betrieben wird, Bei diesem Verfahren wird das Drehmoment der elektrischen Maschine absolut reduziert, also entweder weniger motorisches Drehmoment oder mehr generatorisches Drehmoment. In beiden Fällen wird elektrische Energie gespart.

Um das Verfahren durchzuführen, ist es notwendig, dass die Drehzahl des Verbrennungsmotors größer oder gleich der Drehzahl des ersten Teilgetriebes ist.

Das erfindungsgemäße Verfahren weist einen Verfahrensstart auf, der durch das Abschalten des Verbrennungsmotors und/oder durch das Abkoppeln des Verbrennungsmotors vom Antriebsstrang und/oder durch Reduktion der Anforderung an den Verbrennungsmotor ausgelöst wird.

Das erfindungsgemäße Verfahren wird gestoppt, wenn der Verbrennungsmotor zum Stillstand gekommen ist oder unter eine Grenzdrehzahl fällt oder der Generatorwirkungsgrad unter eine Schwelle fällt.

Die Aufgabe wird gelöst mit einer Steuerung zur Durchführung des Verfahrens, wobei die Steuerung eine Motorsteuerung und/oder eine Getriebesteuerung mit jeweiligen Datenaustausch ist.

### Beschreibung der Zeichnungen

Die Erfindung wird nachfolgend beispielhaft unter Bezugnahme auf die beigefügte Zeichnung beschrieben.
- Fig. 1 und 2: zeigen den zeitlichen Verlauf von Drehzahlen und Drehmomenten im Stand der Technik,
- Figur 3 und 4: zeigen den zeitlichen Verlauf von Drehzahlen und Drehmomenten mit einer Ausführungsform der erfinderischen Lösung,
- Fig. 5 zeigt: eine schematische Darstellung der Hybrid-Architektur in zwei unterschiedlichen Varianten,
- Figur 6 und 7: zeigen schematisch 2 alternative Verfahrensverläufe.

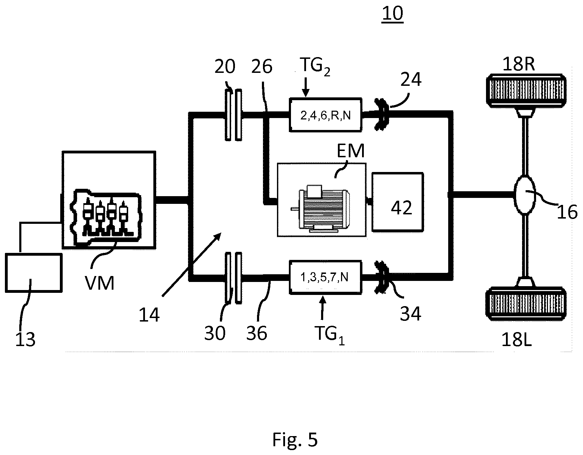

In Figur 5 ist schematisch eine hybride Lösung mit der Integration eines Elektromotors EM in einem Doppelkupplungsgetriebe dargestellt. Als weitere elektrische Maschine weist die Anordnung einen Startergenerator 13 auf.

Die erfindungsgemäße Lösung lässt sich sowohl mit dem Hybridisierung Doppelkupplungsgetriebe allein als auch mit dem Startergenerator allein ausführen. Natürlich sind auch weitere Anordnungen der elektrischen Maschine im Antriebssystem für die Erfindung nutzbar.

Der Antriebsstrang 10 beinhaltet einen Verbrennungsmotor VM, der mit einem Startergenerator 13 verbunden ist. Ferner beinhaltet der Antriebsstrang 10 ein Doppelkupplungsgetriebe 14, dessen Abtriebsseite mit einem Differential 16 verbunden ist. Das Differential 16 verteilt Antriebsleistung auf ein linkes und ein rechtes angetriebenes Rad 18L, 18R.

Das Doppelkupplungsgetriebe 14 beinhaltet eine erste Reibkupplung 30 sowie ein erstes Teilgetriebe TG₁. Das erste Teilgetriebe TG₁ beinhaltet beispielsweise Gangstufen N, 1, 3, 5, etc. die mittels schematisch angedeuteter Schaltkupplungen 34 ein- und auslegbar sind. Die erste Reibkupplung 30 und das erste Teilgetriebe TG₁ bilden einen ersten Leistungsübertragungspfad 36 zur Übertragung von Leistung von dem Antriebsmotor VM zu dem Differential 16.

Das Doppelkupplungsgetriebe 14 beinhaltet ferner eine zweite Reibkupplung 20 sowie ein zweites Teilgetriebe TG₂. Das zweite Teilgetriebe TG₂ beinhaltet beispielsweise die ungeraden Gangstufen N, 2, 4, 6, R, die mittels zugeordneter Schaltkupplungen 24 ein- und auslegbar sind. Die zweite Reibkupplung 20 und das zweite Teilgetriebe TG₂ bilden einen zweiten Leistungsübertragungspfad 26 zur Übertragung von Antriebsleistung von dem Antriebsmotor VM zu dem Differential 16.

Ferner beinhaltet der Antriebsstrang 10 eine elektrische Maschine EM, die mit einer Steuerung 42 zur Ansteuerung und Energieversorgung verbunden ist. Die Steuerung 42 kann auch eine Leistungselektronik sowie eine Batterie beinhalten.

Die elektrische Maschine EM ist an das zweite Teilgetriebe TG₂ fest angebunden, beispielsweise mittels eines Stirnradsatzes oder dergleichen. Alternativ hierzu kann die elektrische Maschine EM mittels einer Koppelanordnung an das zweite Teilgetriebe TG₂ angebunden sein.

Die Anbindung der elektrischen Maschine EM an das zweite Teilgetriebe TG₂, das eine hohe Gangstufe und die Rückwärtsgangstufe aufweist, ermöglicht ein elektrisches Fahren in nahezu allen Betriebssituationen.

Der Antriebsstrang 10 ist dazu ausgelegt, in drei unterschiedlichen Betriebsarten zu arbeiten. In einem konventionellen Antriebsmodus wird Antriebsleistung nur von dem Antriebsmotor, dem Verbrennungsmotor VM erzeugt. Gangwechsel erfolgen auf zugkraftunterbrechungsfreie Art und Weise, indem Antriebsleistung über einen der Leistungsübertragungspfade 26, 36 geführt wird, wobei in dem Teilgetriebe des anderen Leistungsübertragungspfades eine Gangstufe vorgewählt wird.

Anschließend erfolgt ein Gangwechsel durch Übergabe des Leistungsübertragungsflusses von dem einen Pfad auf den anderen Pfad, indem die Reibkupplungen 20, 30 auf überschneidende Art und Weise betätigt werden. Dieser Antriebsmodus ist auf dem Gebiet der Doppelkupplungsgetriebe allgemein bekannt. Ferner kann ein zweiter hybridischer Antriebsmodus eingerichtet werden, bei dem Antriebsleistung sowohl von dem Verbrennungsmotor VM als auch von der elektrischen Maschine EM bereitgestellt wird. Hierbei können die Antriebsleistungen im Wesentlichen über den Summenpunkt am Eingang des zweiten Teilgetriebes TG₂ addiert werden.

Schließlich ist ein dritter Antriebsmodus möglich, bei dem nur die elektrische Maschine EM zur Erzeugung von Antriebsleistung angesteuert wird, wohingegen der Verbrennungsmotor VM stillgelegt wird.

In diesem dritten Antriebsmodus rekuperiert die elektrische Maschine EM über die Antriebsräder 18 R und 18 L und das zweite Teilgetriebe TG₂ Energie.

In einer ersten Variante der Erfindung wird die Lösung beschrieben, wie sie unter Verwendung eines hybridisierten Doppelkupplungsgetriebes darstellbar ist.

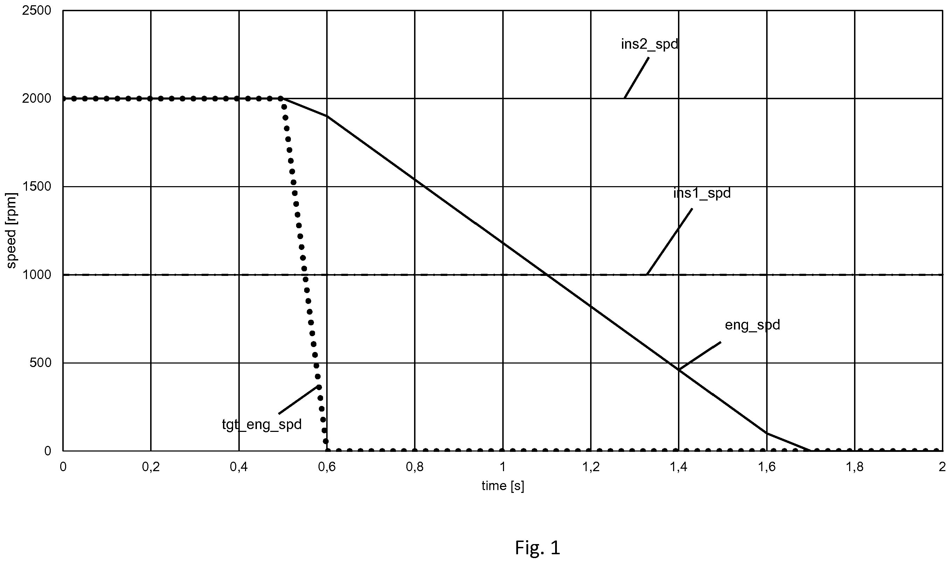

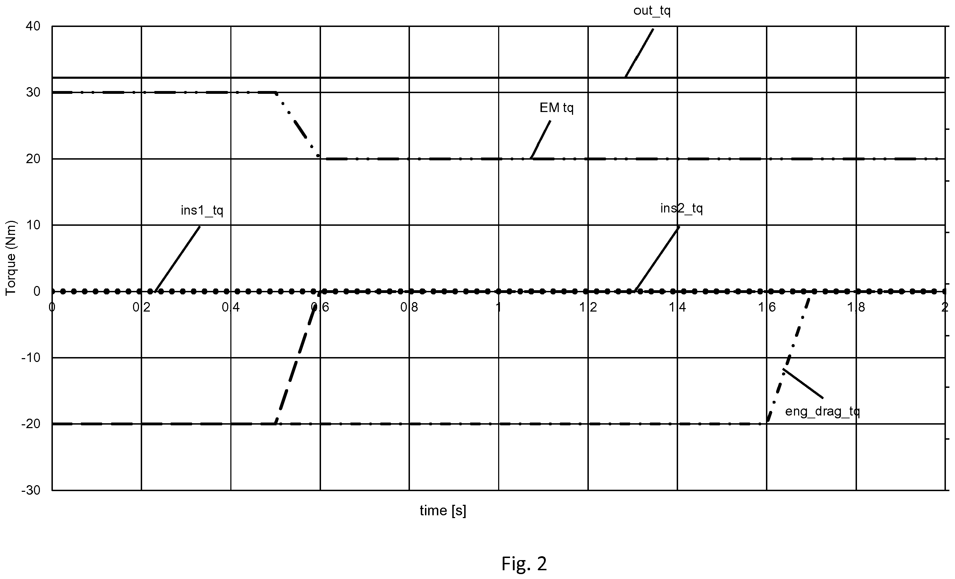

Dazu geht man zunächst von der Situation ohne Verwendung einer elektrischen Maschine aus, wie sie im Stand der Technik verwendet und in den Figuren 1 und 2 gezeigt wird.

Fig. 1 zeigt die Situation, wie sie ohne eine besondere Lösung zur Wiedergewinnung von Energie in einem Doppelkupplungsgetriebe abläuft. Die beiden Teilgetriebe des Doppelkupplungsgetriebes drehen bei unterschiedlichen Drehzahlen. In diesem Beispiel ist der Verbrennungsmotor VM mit dem zweiten Teilgetriebe TG₂, das mit 2000 Umdrehungen/min dreht, gekoppelt, was in der Figur mit der gestrichelten Linie ins2_spd dargestellt ist.

Das erste Teilgetriebe TG₁ dreht mit einer Geschwindigkeit von 1000 Umdrehungen/min und ist durch den Graphen ins1_spd dargestellt.

Zu einem Zeitpunkt, in der gewählten Darstellung bei 0,5 Sekunden, wird der Verbrennungsmotor VM abgeschaltet und die zweite Kupplung 20 des zweiten Teilgetriebes TG₂ geöffnet. Die Drehzahl des Verbrennungsmotors sollte dann schnell abfallen, der gewünschte Abfall der Verbrennungsdrehzahl tgt_eng_spd folgt der der gepunkteten Linie in Fig. 1.

In der Realität verläuft die Drehzahl des Verbrennungsmotors VM aber entlang der geringer abfallenden Kurve und erstreckt sich bis zu einem Zeitpunkt von 1,7 Sekunden entlang des Verlaufs eng_spd. Der Verbrennungsmotor VM trudelt aus und die in ihm gespeicherte Energie wird durch die Schleppmomente im Verbrennungsmotor selbst abgebaut. Das bedeutet, dass theoretisch die Fläche unter der abfallenden Drehzahl eng_spd ein Mass für eine mögliche Energierückgewinnung darstellt.

Figur 2 ist eine Darstellung der Drehmomente über der Zeit auf derselben Skala wie Figur 1.

Das resultierende Ausgangsdrehmoment, das für den Antrieb des Fahrzeugs zur Verfügung steht, ist mit der obersten horizontalen Linie out_tq dargestellt. Da es sich bei der dargestellten Lösung um eine Lösung in einem Doppelkupplungsgetriebe mit einer elektrischen Maschine handelt, findet sich in dieser Darstellung auch der Verlauf des Drehmoments der elektrischen Maschine EM_tq. Deren Drehmoment EM_tq wird zum Zeitpunkt des Abstellens des Verbrennungsmotors VM bei 0,5 Sekunden von 30 Nm auf 20 Nm reduziert. Ab 0,5 Sekunden gibt es am Abtrieb kein Schleppmoment vom Verbrenner, da die Kupplung aufgeht. Um das gleiche Abtriebsmoment zu halten, wird daher weniger Drehmoment der elektrischen Maschine EM benötigt (30 Nm --> 20 Nm).

Das Drehmoment des ersten Teilgetriebes verläuft entlang der Nulllinie mit ins1_tq, während das zweite Teilgetriebe zunächst noch ein Drehmoment ins2_tq aufweist und antriebstechnisch verbunden ist.

Das Drehmoment des Verbrennungsmotors folgt dabei der gestrichelt dargestellten Linie eng_drag_tq, die zeigt, dass der Verbrennungsmotor nachtrudelt und nach Abstellung des Verbrennungsvorgangs selbst bei 0,5 Sekunden noch bis 1,7 Sekunden nachläuft.

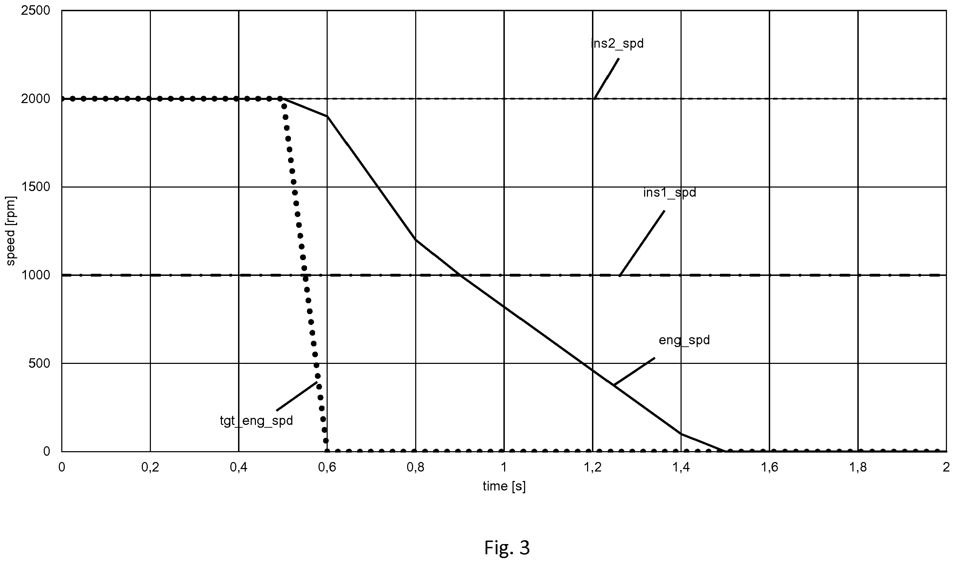

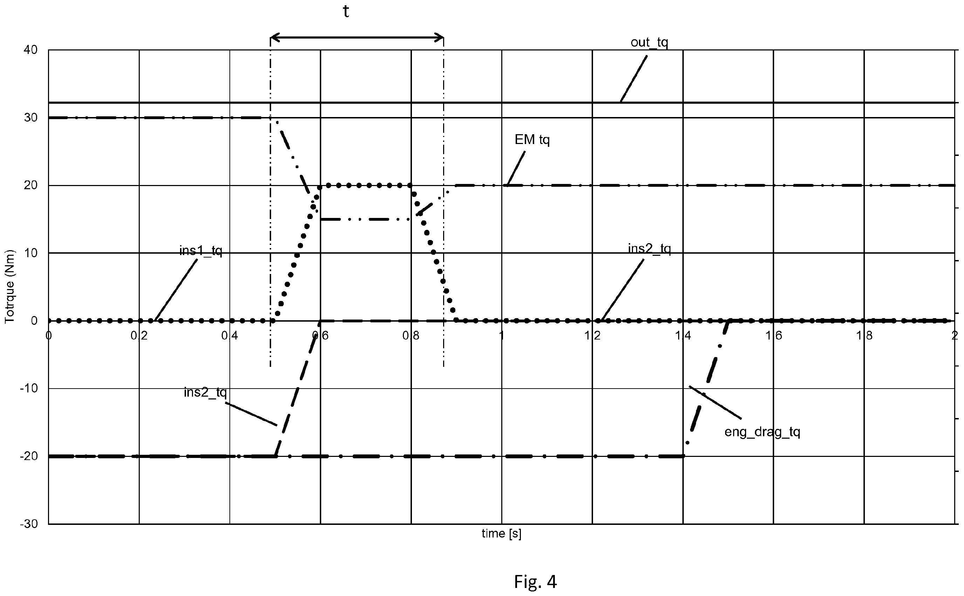

In den Figuren 3 und 4 sind die Drehzahlverläufe sowie die Drehmomente dargestellt, wenn Rotationsenergie aus dem Verbrennungsmotor VM mithilfe der im Doppelkupplungsgetriebe integrierten elektrischen Maschine EM wiedergewonnen wird.

Die beiden Teilgetriebe drehen wieder mit unterschiedlichen Rotationsgeschwindigkeiten. Das erste Teilgetriebe TG₁ dreht bei 2000 Umdrehungen/min ins1_spd das zweite Teilgetriebe TG₂ dreht bei 1000 Umdrehungen/min, ins2_spd. Der Abfall der Drehgeschwindigkeit des Verbrennungsmotors folgt wieder dem Graphen eng_spd, nach dem Ausschalten des Verbrennungsmotors VM bei 0,5 s. Solange der Verbrennungsmotor VM eine höhere Geschwindigkeit aufweist als das erste Teilgetriebe TG₁ bei den beispielhaften 1000 Umdrehungen, kann Energie gewonnen werden.

In der Figur 4 ist dargestellt, wie das Getriebe gestellt wird, um die Rotationenergie des Verbrennungsmotors VM teilweise wiedergewinnen zu können.

Mit dem Abstellen des Verbrennungsmotors VM wird die zweite Kupplung 20 des zweiten Teilgetriebes TG₂ geöffnet. Das Ziel ist dabei, den Verbrennungsmotor schneller abzubremsen und die Energie zurückzugewinnen.

Zu diesem Zweck wird die erste Kupplung 30 des ersten Teilgetriebes TG₁ mit einen Drehmoment ins1_tq von 20 Nm gestellt. Gleichzeitig wird das Drehmoment EM_tq der elektrischen Maschine EM reduziert. Dadurch wird der Verbrennungsmotor VM etwas schneller abgebremst und die in ihm enthaltene Energie der Rotation wird verwendet, indem die elektrische Maschine EM weniger Leistung abgeben muss. bzw. mehr generieren kann.

Dazu wird das Drehmoment EM_tq der elektrischen Maschine EM während der Zeit t, in der das erste Teilgetriebe ein Drehmoment stellt, unter das Zieldrehmoment herabgesetzt.

Die Entnahme der Energie lässt sich daran erkennen, dass der Verbrennungsmotor schneller, nämlich nur bis zu einem Zeitpunkt von 1,5 Sekunden in der graphischen Darstellung, austrudelt, d.h. seine Restenergie ist nicht mehr so hoch. Allerdings lässt sich die Restenergie in einem Doppelungskupplungsgetriebe mit Hybridisierung nicht komplett wiedergewinnen. Für die Rückgewinnung der Energie muss die Drehzahl des Verbrennungsmotors VM über der Drehzahl des langsameren Teilgetriebes liegen.

Da bei einem hybridisierten Doppelkupplungsgetriebe der Verbrennungsmotor VM immer ausgeschaltet wird oder ausgeschaltet werden kann, wenn die Getriebesteuerung eine Reduktion der Antriebsleistung als Anforderung erkennt, kann hier über einen Fahrzyklus eine gute Energierückgewinnung erfolgen.

Eine weitere Möglichkeit der Energierückgewinnung in einem hybridisierten Doppelkupplungsgetriebe besteht darin, dass die elektrische Maschine EM durch Öffnen der Kupplung 20 des zweiten Teilgetriebes, das neutral gestellt ist, geladen wird. Anders sieht es bei einer Lösung aus, in der der Startergenerator 13 unabhängig von einem Getriebe an das System Verbrennungsmotor mit Getriebe angebunden ist. Bei der Verwendung eines Startergenerators kann mit der Anforderung, dass der Verbrennungsmotor ausgeschaltet werden soll, vom Startergenerator ein hohes generatorisches Moment erzeugt werden, um den Verbrennungsmotor VM möglichst schnell auf die Ziel-Drehzahl zu bringen und die kinetische Energie des Verbrennungsmotors VM so gut wie möglich wiederzugewinnen. Die Anbindung des Startergenerators muss dafür lediglich vor dem Getriebe liegen. Bei dieser Art der Energierückgewinnung ist der Getriebetyp nicht von Bedeutung.

In einem solchen Fall kann die komplette Restenergie des Verbrennungsmotors VM nach dem Abschalten über den Startergenerator 13 wiedergewonnen werden und als elektrische Energie gespeichert werden.

Dieses Verfahren für die Energierückgewinnung eignet sich für Fahrzeuge, die mit Start-Stopp-Automatik ausgestattet sind. Dabei kann der Startergenerator die restliche Energie des Verbrennungsmotors VM bis nahezu Stillstand wiedergewinnen.

Die gesamte Idee der Rückgewinnung von elektrischer Energie beim Verbrennungsstopp lässt sich auch bei dem Abkoppeln des Verbrennungsmotors VM vom Antriebsstrang realisieren. Sobald der Verbrennungsmotor VM im Zustand des Segelns von dem Antriebsstrang entkoppelt wird, kann die Energie rückgewonnen werden, die im Auslaufen der Drehzahl des Verbrennungsmotors VM enthalten ist.

Dabei ist die Art des angeschlossenen Getriebes nicht von Bedeutung. Wenn ein Startergenerator vorhanden ist, kann auch diese Energie mit hoher Ausbeute rückgewonnen werden.

Die Realisierung der erfindungsgemäßen Methode erfolgt in einer Softwarelösung, die in der Fahrzeugsteuerung, genauer entweder in einer Motorsteuerung, einer Getriebesteuerung oder einer Kombination der Steuerungen enthalten sein kann.

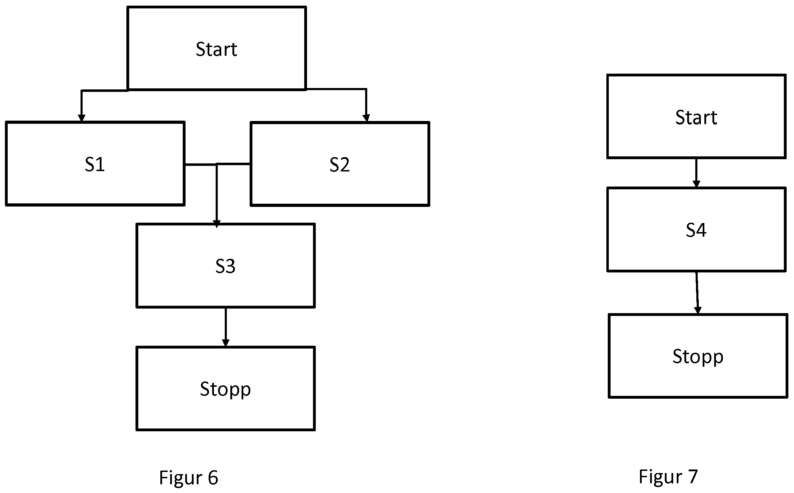

Das erfindungsgemäße Verfahren wird schematisch noch mal in den Figuren 6 und 7 dargestellt. Das Verfahren beginnt mit dem Block "Start", der durch unterschiedliche Vorgänge getriggert werden kann. Der Start kann durch das Abschalten des Verbrennungsmotors VM initiiert sein. Der Start kann auch durch das Abkoppeln des Verbrennungsmotors VM vom Antriebsstrang ausgelöst werden. Weiterhin kann der Start des Verfahrens auch durch Reduktion der Anforderung an den Verbrennungsmotor VM ausgelöst sein.

Im Verfahrensschritt S1 wird mit der ersten Kupplung 30 des ersten Teilgetriebes TG₁ ein Drehmoment gestellt, während die zweite Kupplung 20 geöffnet wird. Gleichzeitig wird in S2 das Drehmoment der elektrischen Maschine unter den Sollwert reduziert.

Dieser Zustand hält während der Zeit t an, was im Schritt S3 dargestellt ist. In dieser Zeit t, die im gezeigten Beispiel 0,4 Sekunden beträgt, verbraucht die elektrische Maschine weniger Energie.

Nach Ablauf der Zeit t ist die Drehzahldifferenz zwischen dem Verbrennungsmotor VM und der schneller drehenden Welle des Teilgetriebes aufgebraucht. Alternativ ist die Drehzahldifferenz zwischen Abtriebswelle des Verbrennungsmotors und der schneller drehenden Welle des Teilgetriebes aufgebraucht.

Das Verfahren wird an dieser Stelle gestoppt, das gestellte Drehmoment der ersten Kupplung 30 wieder auf null gestellt und das Drehmoment der elektrischen Maschine wieder auf den Sollwert zurückgesetzt.

Figur 7 stellt schematisch die vereinfachte Lösung dar, wenn die Energie des Verbrennungsmotors VM beim Abstellen oder beim Abkoppeln direkt an einen Startergenerator oder eine vom Rest des Getriebes entkoppelter, elektrischer Maschine im Getriebe abgegeben wird. Eine solche Anordnung kann eine Anbindung der elektrischen Maschinen eingangsseitig vor dem Getriebe beinhalten, oder einen Anbindung abtriebsseitig an einer Welle.

Der Startvorgang ist dabei derselbe wie in Figur 6. Im Schritt S4 wird die elektrische Maschine, die als Generator arbeiten soll, mit dem drehenden Fahrzeugelement verbunden und die kinetische Energie somit in elektrische Energie umgewandelt. Das Verfahren wird gestoppt, wenn entweder der Verbrennungsmotor VM vollständig zum Stillstand gekommen ist oder in einer alternativen Lösung seine Zieldrehzahl erreicht hat- es kann auch z.B. Leerlauf statt Stillstand sein - oder die Energierückgewinnung im Generator aus Wirkungsgradgründen nicht mehr weiterläuft.

Das Verfahren ist auf unterschiedliche Hybrid-Anordnungen anwendbar. Es ist auch eine Anordnung der elektrischen Maschine EM eingangsseitig vor dem Getriebe oder eine Anordnung der elektrischen Maschine EM am Getriebeausgang mit direkter Anbindung an der Abtriebswelle des Getriebes.

### Bezugszeichenliste

- 10: Antriebsstrang
- 13: Startergenerator
- VM: Verbrennungsmotor
- 14: Doppelkupplungsgetriebe
- 16: Differenzial
- 18 L, 18 R: rechtes und linkes Rad
- 30: erste Reibungskupplung
- 34: Schaltkupplung
- 36: erster Leistungsübertragungspfad
- 20: zweite Reibkupplung
- 24: zweite Schaltkupplung
- 26: zweiter Leistungsübertragungspfad
- 42: Steuerung
- EM: elektrische Maschine
- TG₁: erstes Teilgetriebe
- TG₂: zweites Teilgetriebe
- S1-S4: Verfahrensschritte

## Patentansprüche

1. Verfahren zum Rückgewinnen von kinetischer Energie eines Verbrennungsmotors (VM) durch Reduktion der Drehzahl des Verbrennungsmotors (VM) während einer vorgegeben Zeit (t) in einem Fahrzeug und Umwandlung der kinetischen Energie der Rotation des Verbrennungsmotors (eng_spd), direkt am Verbrennungsmotor oder an einer sich drehenden Welle der Antriebseinheit, in elektrische Energie durch mindestens eine elektrische Maschine (EM, 13), wobei der Verbrennungsmotor (VM) vom Antriebsstrang des Fahrzeugs entkoppelt wird, **dadurch gekennzeichnet, dass** eine der elektrischen Maschinen (EM) in einem Doppelkupplungsgetriebe (14) mit einem ersten und zweiten Teilgetriebe (TG₁, TG₂) an einem zweiten Teilgetriebe (TG₂) ankoppelbar ist, wobei die Drehzahl des Verbrennungsmotors (tgt_eng_spd) während der vorgegebenen Zeit (t) größer oder gleich der Drehzahl des ersten Teilgetriebes (ins1_spd) ist.

2. Verfahren zum Rückgewinnen von kinetischer Energie eines Verbrennungsmotors (VM) nach Anspruch 1, **dadurch gekennzeichnet, dass** der Verbrennungsmotor (VM) abgeschaltet wird und zumindest ein Teil der kinetischen Energie des auslaufenden Verbrennungsmotors (VM) rückgewonnen wird.

3. Verfahren zum Rückgewinnen von kinetischer Energie eines Verbrennungsmotors (VM) nach Anspruch 1, **dadurch gekennzeichnet, dass** der Verbrennungsmotor (VM) abgekoppelt wird und zumindest ein Teil der kinetischen Energie des auslaufenden Verbrennungsmotors (VM) rückgewonnen wird.

4. Verfahren zum Rückgewinnen von kinetischer Energie eines Verbrennungsmotors (VM) einem der vorhergehenden Ansprüche, **dadurch gekennzeichnet, dass** die Energie des auslaufenden Verbrennungsmotors (VM) mittels einer ersten Kupplung (30) und Stellen eines Drehmoments (ins1_tq) im ersten Teilgetriebe (TG₁) und einer Reduktion des Drehmoments der elektrischen Maschinen (EM_tq) im zweiten Teilgetriebe (TG₂) erfolgt.

5. Verfahren zum Rückgewinnen von kinetischer Energie eines Verbrennungsmotors (VM) nach einem der vorhergehenden Ansprüche, **dadurch gekennzeichnet, dass** der Verfahrensstart (Start) durch das Abschalten des Verbrennungsmotors (VM) und/oder durch das Abkoppeln des Verbrennungsmotors (VM) vom Antriebsstrang und/oder durch Reduktion der Anforderung an den Verbrennungsmotor (VM) ausgelöst wird.

6. Verfahren zum Rückgewinnen von kinetischer Energie eines Verbrennungsmotors (VM) nach einem der vorhergehenden Ansprüche, **dadurch gekennzeichnet, dass** das Verfahren gestoppt wird (Stopp), wenn der Verbrennungsmotor (VM) zum Stillstand gekommen ist oder unter eine Grenzdrehzahl fällt oder der Generatorwirkungsgrad unter eine Schwelle fällt.

7. Steuerung zur Durchführung des Verfahrens nach den vorhergehenden Ansprüchen, wobei die Steuerung (42) eine Motorsteuerung und/oder eine Getriebesteuerung mit jeweiligen Datenaustausch ist.

## Claims

1. Method for recovering kinetic energy of a combustion engine (VM) by reduction of the rotational speed of the combustion engine (VM) during a predefined time (t) in a vehicle and conversion of the kinetic energy of the rotation of the combustion engine (eng_spd), directly at the combustion engine or a rotating shaft of the drive unit, into electrical energy by means of at least one electric machine (EM, 13), wherein the combustion engine (VM) is decoupled from the drivetrain of the vehicle, **characterized in that** one of the electric machines (EM) can, in a dual-clutch transmission (14) with a first and a second partial transmission (TG₁, TG₂), be coupled to a second partial transmission (TG₂), wherein the rotational speed of the combustion engine (tgt_eng_spd) is, during the predefined time (t), higher than or equal to the rotational speed of the first partial transmission (ins1_spd).

2. Method for recovering kinetic energy of a combustion engine (VM) according to Claim 1, **characterized in that** the combustion engine (VM) is deactivated and at least a part of the kinetic energy of the running-down combustion engine (VM) is recovered.

3. Method for recovering kinetic energy of a combustion engine (VM) according to Claim 1, **characterized in that** the combustion engine (VM) is decoupled and at least a part of the kinetic energy of the running-down combustion engine (VM) is recovered.

4. Method for recovering kinetic energy of a combustion engine (VM) according to one of the preceding claims, **characterized in that** the energy of the running-down combustion engine (VM) is performed by means of a first clutch (30) and setting of a torque (ins1_tq) in the first partial transmission (TG₁) and a reduction of the torque of the electric machine (EM_tq) in the second partial transmission (TG₂).

5. Method for recovering kinetic energy of a combustion engine (VM) according to one of the preceding claims, **characterized in that** the method start (Start) is triggered by the deactivation of the combustion engine (VM) and/or by the decoupling of the combustion engine (VM) from the drivetrain and/or by reduction of the demand on the combustion engine (VM).

6. Method for recovering kinetic energy of a combustion engine (VM) according to one of the preceding claims, **characterized in that** the method is stopped (Stopp) if the combustion engine (VM) has come to a standstill or falls below a threshold rotation speed or the generator efficiency falls below a threshold.

7. Controller for carrying out the method according to any of the preceding claims, wherein the controller (42) is an engine controller and/or a transmission controller with respective data exchange.

## Revendications

1. Procédé de récupération de l'énergie cinétique d'un moteur à combustion interne (VM) par la réduction de la vitesse de rotation du moteur à combustion interne (VM) pendant une durée (t) prédéfinie dans un véhicule et conversion de l'énergie cinétique de la rotation du moteur à combustion interne (eng_spd), directement au niveau du moteur à combustion interne ou au niveau d'un arbre en rotation du groupe de propulsion, en énergie électrique par au moins une machine électrique (EM, 13), le moteur à combustion interne (VM) étant débrayé de la chaîne cinématique du véhicule, **caractérisé en ce que** l'une des machines électriques (EM), dans une boîte de vitesses à double embrayage (14) comprenant une première et une deuxième boîte de vitesses partielle (TG₁, TG₂), peut être accouplée à une deuxième boîte de vitesses partielle (TG₂), la vitesse de rotation du moteur à combustion interne (tgt_eng_spd) pendant la durée (t) prédéfinie étant supérieure ou égale à la vitesse de rotation de la première boîte de vitesses partielle (ins1_spd).

2. Procédé de récupération de l'énergie cinétique d'un moteur à combustion interne (VM) selon la revendication 1, **caractérisé en ce que** le moteur à combustion interne (VM) est arrêté et au moins une partie de l'énergie cinétique du moteur à combustion interne (VM) en course d'inertie est récupérée.

3. Procédé de récupération de l'énergie cinétique d'un moteur à combustion interne (VM) selon la revendication 1, **caractérisé en ce que** le moteur à combustion interne (VM) est débrayé et au moins une partie de l'énergie cinétique du moteur à combustion interne (VM) en course d'inertie est récupérée.

4. Procédé de récupération de l'énergie cinétique d'un moteur à combustion interne (VM) selon l'une des revendications précédentes, **caractérisé en ce que** l'énergie du moteur à combustion interne (VM) en course d'inertie intervient au moyen d'un premier accouplement (30) et des positions d'un couple (ins1_tq) dans la première boîte de vitesses partielle (TG₁) et d'une réduction du couple des machines électriques (EM_tq) dans la deuxième boîte de vitesses partielle (TG₂).

5. Procédé de récupération de l'énergie cinétique d'un moteur à combustion interne (VM) selon l'une des revendications précédentes, **caractérisé en ce que** le début du procédé (Start) est déclenché par la mise à l'arrêt du moteur à combustion interne (VM) et/ou par le débrayage du moteur à combustion interne (VM) de la chaîne cinématique et/ou par la réduction de la sollicitation du moteur à combustion interne (VM).

6. Procédé de récupération de l'énergie cinétique d'un moteur à combustion interne (VM) selon l'une des revendications précédentes, **caractérisé en ce que** le procédé est arrêté (Stopp) lorsque le moteur à combustion interne (VM) s'est immobilisé ou se retrouve au-dessous d'une vitesse de rotation limite ou le rendement du générateur devient inférieur à un seuil.

7. Commande destinée à mettre en œuvre le procédé selon l'une des revendications précédentes, la commande (42) étant une commande de moteur et/ou une commande de boîte de vitesses comprenant un échange de données respectif.
